# EUROPÄISCHE PATENTANMELDUNG

(11) **EP 1 236 615 A1**
(43) Veröffentlichungstag der Anmeldung: **04.09.2002**
(21) Anmeldenummer: 01810207.9
(22) Anmeldetag: 28.02.2001
(51) Int. Cl.: B60Q 1/44

(54) **Fahrzeug mit nach vorne wirkendem Bremssignalisierungssystem**

(71) Anmelder: Imhof, Mario, 3006 Bern (CH); Sigg, Simon, 3095 Spiegel b. Bern (CH); Mischler, Thomas, 3011 Bern (CH)
(72) Erfinder: Imhof, Mario, 3006 Bern (CH); Sigg, Simon, 3095 Spiegel b. Bern (CH); Mischler, Thomas, 3011 Bern (CH)
(74) Vertreter: Roshardt, Werner Alfred, Dipl.-Phys.

(57) **Zusammenfassung**

Ein Fahrzeug (1) mit einer Bremsvorrichtung weist ein in Fahrtrichtung des Fahrzeugs (1) nach vorn gerichtetes optisches Signalisierungssystem auf, welches eine Bremsbetätigung im Fahrzeug (1) signalisiert. Das optische Signalisierungssystem umfasst eine in Fahrtrichtung nach vorn abstrahlende Bremsleuchte (3.1/3.2, 4.1/4.2, 6, 10.1/10.2, 11), welche an verschiedenen Stellen des Fahrzeugs (1) angeordnet werden kann, vorzugsweise an der Frontpartie des Fahrzeugs (1). Beispielsweise werden mehr als eine Bremsleuchte (3.1/3.2, 4.1/4.2, 6, 10.1/10.2, 11) an einem Fahrzeug (1) befestigt. Mit diesem optischen Signalisierungssystem können Verkehrsteilnehmer auch gegen die Fahrtrichtung des Fahrzeugs (1) erkennen, ob das Fahrzeug (1) bremst und können ihr Verhalten im Verkehr entsprechend anpassen.

## Beschreibung

### Technisches Geblet

Die Erfindung betrifft ein Fahrzeug mit einer Bremsvorrichtung.

### Stand der Technik

Fahrzeuge, insbesondere Motorfahrzeuge mit einer Bremsvorrichtung haben entsprechend den allgemeinen gesetzlichen Bestimmungen Bremslichter. Damit wird die Gefahr einer Auffahrtkollision stark vermindert. Der nachfolgende Fahrzeuglenker kann rechtzeitig den eigenen Bremsvorgang einleiten.

### Darstellung der Erfindung

Aufgabe der Erfindung ist es, die Verkehrssicherheit, insbesondere im Strassenverkehr weiter zu verbessern.

Die Lösung der Aufgabe ist durch die Merkmale des Anspruchs 1 definiert. Gemäss der Erfindung weist ein Fahrzeug mit einer Bremsvorrichtung ein in Fahrtrichtung nach vorn gerichtetes optisches Signalisierungssystem zur Signalisierung einer Bremsbetätigung der Bremsvorrichtung auf.

Das optische Signalisierungssystem umfasst ein Licht abstrahlendes Mittel, welches an einer in Fahrtrichtung nach vorn sichtbaren Vorrichtung des Fahrzeugs angebracht wird. Unter der Fahrtrichtung des Fahrzeugs wird dessen bevorzugte Fahrtrichtung verstanden. Bei einem Motorfahrzeug oder Zweirad wird beispielsweise anhand der Scheinwerfer und/oder des Kühlergrills die Frontpartie des Fahrzeugs und somit dessen bevorzugte Fahrtrichtung bestimmt, d. h. die Fahrtrichtung, für welche das Fahrzeug gebaut wurde. Betätigt ein Lenker die Bremsvorrichtung seines Fahrzeugs z. B. durch Betätigung eines Bremspedals oder eines Bremshebels, beginnt das abstrahlende Mittel in Fahrtrichtung nach vorne zu strahlen, zusätzlich zu anderen meistens ebenfalls vorhandenen Signalisierungsvorrichtungen (z. B. Bremsrücklicht). Somit ist der Bremsvorgang auch für Verkehrsteilnehmer ersichtlich, welche das Fahrzeug in Fahrtrichtung von vorne sehen. Fussgänger und insbesondere Kinder am Rand eines Verkehrsweges, beispielsweise einer Strasse, können durch das erfindungsgemässe Signalisierungssystem leichter und auch sicherer entscheiden, ob sie den Verkehrsweg gefahrlos überqueren können oder nicht.

Die heutigen optischen Signalisierungsvorrichtungen sind, insbesondere im Strassenverkehr, immer aus der Sicht des Fahrers und der anderen ebenfalls auf der Strasse zirkulierenden Verkehrsteilnehmer ausgerichtet. Auf die besonderen Bedürfnisse der Fussgänger ist bisher keine Rücksicht genommen worden. Für Fussgänger, insbesondere kleine Kinder und ältere Personen, sind Bremsvorgänge eines Fahrzeugs in Fahrtrichtung nach vorne oftmals nicht klar erkennbar. Die Fussgänger müssen sich auf ihren Eindruck verlassen, ob ein Fahrzeug bremst und ihnen somit die gefahrlose Überquerung eines Verkehrsweges möglich ist oder nicht. Infolge des hohen Verkehrsaufkommens sind die meisten Fussgänger überfordert, weshalb gerade im Stadtverkehr Unfälle mit Fussgängern eine zunehmende Tendenz aufweisen. Dieser Entwicklung kann mit der Erfindung Einhalt geboten werden.

Das erfindungsgemässe Signalisierungssystem kann mehr als ein abstrahlendes Mittel umfassen. Beispielsweise kann ein Fahrzeug links und rechts jeweils ein abstrahlendes Mittel aufweisen. Zusätzlich zu einer paarweisen Anordnung kann ein weiteres abstrahlendes Mittel in der Mitte der Frontansicht eines Fahrzeugs angeordnet werden.

Kann ein Fahrzeug in zwei Richtungen, beispielsweise nach vorne und hinten, gleichwertig eingesetzt werden und somit keine bevorzugte Fahrtrichtung des Fahrzeugs bestimmt werden, kann in beiden Richtungen ein Licht abstrahlendes Mittel angeordnet werden. Das Licht abstrahlende Mittel wird vorzugsweise gegenüber den weiter vorhandenen optischen Signalisierungsmitteln optisch abgegrenzt, damit keine Verwechslungen beziehungsweise Irritationen entstehen.

Das abstrahlende Mittel für das optische Signalisierungssystem ist z. B. eine Leuchte, welche einen Leuchtkörper und einen Reflektor umfasst. Der Reflektor lenkt das Licht des Leuchtkörpers in die gewünschte Richtung. Die Leuchte wird beispielsweise elektrisch über die Stromversorgung des Fahrzeugs versorgt. Es kann auch eine eigene Stromversorgung, beispielsweise mit Batterien oder Solarzellen, verwendet werden, insbesondere wenn das Fahrzeug keine eigene Stromversorgung aufweist.

In einer weiteren, bevorzugten Ausführungsform umfasst das optische Signalisierungssystem eine in Fahrtrichtung nach vorn abstrahlende Bremsleuchte. Als Bremsleuchte ist in den meisten Ländern eine rote Signalisierung genormt. Dabei kann der Reflektor der Leuchte mit einer rot eingefärbten transparenten Abdeckung abgedeckt werden, z. B. aus Glas oder Kunststoff. Als Variante zu einer rot eingefärbten Abdeckung der Leuchte kann der Leuchtkörper selbst rot eingefärbt sein. Entspricht die Farbe Rot nicht einer länderspezifischen Norm zur Signalisierung eines Bremsvorgangs, kann die Abdeckung oder der Leuchtkörper den entsprechenden nationalen Erfordernissen angepasst werden.

Die Bremsleuchte wird beispielsweise mit der vorhandenen Bremslichtanlage gekoppelt. Die Leuchtstärke der Bremsleuchte des erfindungsgemässen optischen Signalisierungssystems entspricht vorzugsweise den Normen, wie sie für die in Fahrtrichtung nach hinten abstrahlenden Bremslichter bestehen.

Als Alternative zur Bremsleuchte kann ein passiv abstrahlendes Mittel angeordnet werden. Dazu wird ein eingefärbter Reflektor, beispielsweise ein Rückstrahler, wie bei einem Fahrrad in Fahrtrichtung nach vorne ausgerichtet. Mit einem Leuchtkörper wird der eingefärbte Reflektor angeleuchtet, wenn die Bremsvorrichtung des Fahrzeugs betätigt wird. Es sind auch einfache mechanische Signalisierungsmittel einsetzbar, wobei die Bremsbetätigung an der Position des verstellbaren Signalisierungsmittels erkennbar ist.

Die Bremsleuchte des erfindungsgemässen optischen Signalisierungssystems in Fahrtrichtung des Fahrzeugs von vorne für jeden Verkehrsteilnehmer erkennbar angeordnet. Beispielsweise ist die Bremsleuchte an einer in Fahrtrichtung nach vorn gerichteten Rückseite eines Rückspiegels angebracht. Die Bremsleuchte kann an der Rückseite aufgeklebt oder mit einer Halterung an der Rückseite befestigt sein.

Wird die Bremsleuchte an der Rückseite eines Seitenrückspiegels angeordnet, ist es vorteilhaft, wenn die Bremsleuchte im Seitenrückspiegel versenkt und bündig mit der Aussenfläche der Rückseite des Seitenrückspiegels eingebaut ist. Neben ästhetischen Überlegungen ist eine solche Anordnung der Bremsleuchte auch aerodynamisch von Vorteil, da weniger Verwirbelungen an der Aussenseite des Fahrzeugs entstehen und somit der Treibstoffverbrauch nicht unnötig erhöht wird. Weiter wird die Reinigung des Fahrzeugs, insbesondere in einer Waschanlage erleichtert, da die Bürsten nicht an der Vorrichtung einhängen können und der Reinigungsgrad durch die Waschanlage erhalten bleibt.

Eine weitere Möglichkeit für die Anordnung der Bremsleuchte eines erfindungsgemässen optischen Signalisierungssystems ist in oder neben einem Scheinwerfer. Die fest in und/oder an der Karosserie des Fahrzeugs eingebauten Scheinwerfer sind im Wesentlichen in Fahrtrichtung nach vorne gerichtet und somit für alle Verkehrsteilnehmer erkennbar. Wird die Bremsleuchte im Scheinwerfer angeordnet, ist somit auch die Bremsleuchte für alle anderen Verkehrsteilnehmer gegen die Fahrtrichtung des Fahrzeugs wahrnehmbar. Ein weiterer Vorteil ergibt sich durch die Scheinwerferkonstruktion, weil die Bremsleuchte bei einer Anordnung im Scheinwerfer durch dessen Abdeckung vor Verschmutzung geschützt wird. Viele Fahrzeuge sind mit einer Scheinwerfer-Reinigungsvorrichtung versehen, welche die Abdeckung des Scheinwerfers reinigt und somit auch die Erkennbarkeit der nach vorn gerichteten Bremsleuchte gewährleistet. Die Bremsleuchte kann auch neben dem Scheinwerfer angeordnet sein. Vorzugsweise ist in beziehungsweise neben jedem Scheinwerfer zumindest eine Bremsleuchte angeordnet.

Ein besonderer Vorteil bei der Anordnung der Bremsleuchte in oder neben den Scheinwerfern ergibt sich durch die geplante beziehungsweise vorhandene Kabelführung. Da die Scheinwerfer verkabelt werden müssen, kann einerseits die Verkabelung der Bremsleuchte mit der Stromversorgung und andererseits die Verkabelung der Bremsleuchte mit der Steuerungseinrichtung mit einfachen Mitteln in den Kabelsträngen für die Scheinwerfer integriert oder mit diesen kombiniert werden.

Im Scheinwerfer kann auch ein transparenter, rot eingefärbter Rotfilter angeordnet werden, welcher vor einen Teil des Leuchtkörpers des Scheinwerfers geschwenkt werden kann, sobald die Bremsvorrichtung des Fahrzeugs betätigt wird. Wird die Bremsvorrichtung nicht mehr betätigt, wird der Filter wieder aus dem Leuchtbereich des Leuchtkörpers des Scheinwerfers herausgeschwenkt.

Die Bremsleuchte kann beispielsweise auch im Fahrgastraum des Fahrzeugs derart angeordnet werden, dass sie durch die Windschutzscheibe in Fahrtrichtung nach vorn leuchten kann und gleichzeitig durch die Windschutzscheibe geschützt wird.

Eine geeignete Positionierung der Bremsleuchte im Fahrgastraum ist die in Fahrtrichtung nach vorn ausgerichtete Rückseite eines Rückspiegels. Die Bremsleuchte kann bei dieser Anordnung nur auf die Rückseite aufgeklebt werden. Ästhetisch ist diese Anordnung nicht störend, da die Bremsleuchte auf der von den im Fahrzeug transportierten Personen abgewandten Seite des Rückspiegels befestigt ist. Durch den Schutz der Windschutzscheibe treten keine weiteren Nachteile dieser Art der Befestigung auf.

Als weitere geeignete Befestigungspunkte für die Bremsleuchte bieten sich z. B. die Windschutzscheibe selbst oder das Armaturenbrett des Fahrzeugs an. Dabei kann die Bremsleuchte auch versenkt im Armaturenbrett angeordnet sein. Wird die Bremsvorrichtung betätigt, fährt ein Mechanismus die Bremsleuchte derart aus dem Armaturenbrett heraus, dass sie für die anderen Verkehrsteilnehmer sichtbar wird. Bei Nichtgebrauch der Bremsvorrichtung wird die Bremsleuchte mittels dem Mechanismus wieder eingefahren. Dieser Mechanismus kann zeitlich verzögert gesteuert werden, damit im Stop-and-Go-Verkehr die Bremsleuchte nicht andauernd in Bewegung ist und so den Lenker des Fahrzeugs in seiner Konzentration stört.

Bevorzugt wird das erfindungsgemässe optische Signalisierungssystem an einem Personentransportfahrzeug, insbesondere an einem Personenkraftwagen (PKW) angeordnet. Weiter ist das erfindungsgemässe Signalisierungssystem auch für andere Fahrzeuge wie Autobusse, Strassenbahnen, Lastkraftwagen (LKW), Trikes, Schiffe, Flugzeuge usw. geeignet.

Werden Fahrzeuge des öffentlichen Verkehrs mit einer Bremsleuchte des erfindungsgemässen optischen Signalisierungssystems ausgerüstet, wird zusätzlich zu den daraus resultierenden sicherheitstechnischen Vorteilen ein Informationssystem für die Benützer des Fahrzeugs geschaffen. In dichten Verkehrssystemen werden gewisse Linien, beispielsweise in einem Bussystem einer grösseren Stadt, gleichzeitig mit Bussen, welche jede Haltestelle der Linie bedienen, und Expressbussen, welche nur einige ausgewählte Haltestellen bedienen, betrieben. Gleichzeitig werden immer mehr separate Verkehrsstreifen in Städten angeordnet, welche ausschliesslich dem öffentlichen Verkehr zur Verfügung stehen. Für die Benützer ist es insbesondere aus einer gewissen Entfernung nicht klar ersichtlich, ob es sich um einen Expressbus oder einen normal verkehrenden Bus handelt und somit ob der Bus nun an der Haltestelle anhält oder nicht. Fährt ein Bus zur Haltestelle, welcher mit einer in Fahrtrichtung nach vorn ausgerichteten Bremsleuchte ausgerüstet ist, kann der Benutzer an der leuchtenden Bremsleuchte erkennen, ob der Bus an der Haltestelle anhält. Gegebenenfalls kann der Benutzer aufgrund dieser Information entscheiden, ob er zum Bus rennt, wenn er noch eine gewisse Distanz bis zur Haltestelle zu überwinden hat.

Auch an einem Zweiradfahrzeug kann das erfindungsgemässe optische Signalisierungssystem angeordnet werden. Neben Motorräder, Motorroller und Motorfahrräder können auch Fahrräder mit diesem System ausgerüstet sein. Insbesondere bei einer Anordnung einer Bremsleuchte an Fahrrädern wird vorzugsweise die Bremsleuchte mit einer eigenen, beispielsweise direkt im Gehäuse der Bremsleuchte integrierten Stromversorgung versehen.

Das erfindungsgemässe optische Signalisierungssystem kann als Bausatz zur Verfügung gestellt werden. Ein solcher Bausatz ermöglicht einen nachträglichen Einbau an einem Fahrzeug. Je nach Ausführung des Bausatzes kann der Einbau am Fahrzeug selbst vorgenommen werden. Der Bausatz wird vorteilhaft in verschiedenen Ausführungen hergestellt, insbesondere damit auf unterschiedliche Fahrzeugmodelle, -arten und länderspezifische Anforderungen Rücksicht genommen werden kann.

Im Wesentlichen umfasst das erfindungsgemässe optische Signalisierungssystem eine Leuchte, einen Sensor zur Erkennung der Einleitung eines Bremsvorgangs, die Kabel für die Stromversorgung des Systems und die Kabel für die Steuerung des Systems. Die Leuchte besteht beispielsweise aus einem Gehäuse mit einem integrierten Reflektor und einem Leuchtkörper, welcher über die Stromversorgung des Fahrzeugs gespiesen wird.

Es ist von Vorteil, wenn das erfindungsgemässe optische Signalisierungssystem mit einer vorhandenen - in bekannter Weise angeordneten - Bremssignalisierungs-Vorrichtung gekoppelt wird. Die bekannten Bremssignalisierungs-Vorrichtungen umfassen in Fahrtrichtung nach hinten ausgerichtete Bremslichter und oft zusätzlich eine in Fahrtrichtung nach hinten abstrahlende Bremsleuchte, welche beispielsweise in einem Heckspoiler oder an der Heckscheibe angeordnet ist. Durch diese Anordnung leuchten alle Bremsleuchten gleichzeitig auf, wenn der Bremsvorgang durch Betätigung der Bremsvorrichtung des Fahrzeugs eingeleitet wird. Dadurch dass die in Fahrtrichtung nach vorn ausgerichtete Bremsleuchte in das bekannte Bremslichtsystem eingebunden ist, entfällt ein nur für die nach vorn gerichtete Bremsleuchte anzuordnender Sensor, welcher eine Betätigung der Bremsvorrichtung des Fahrzeugs erkennt und die Schaltung zur Bremsleuchte herstellt, weil hierfür der bereits vorhandene Sensor verwendet werden kann.

Durch diese Anordnung wird die Verkehrssicherheit, insbesondere im Stadtverkehr massgeblich verbessert. Alle Verkehrsteilnehmer, egal aus welchem Blickwinkel sie das Fahrzeug betrachten, werden auf den Bremsvorgang des Fahrzeugs aufmerksam gemacht, können sich auf die Verlangsamung des Fahrzeugs einstellen und entsprechend reagieren.

Der Rückspiegel mit einem Signalisierungssystem ist besonders zur Verwendung für ein in Fahrtrichtung nach vorn gerichtetes erfindungsgemäss optisches Signalisierungssystem geeignet. Der Rückspiegel weist auf seiner Rückseite, die Seite welche in Fahrtrichtung des Fahrzeugs nach vorn gerichtet ist, vorzugsweise eine Ausnehmung auf. In diese Ausnehmung wird z. B. die Bremsleuchte eingesetzt. Idealerweise ist die Ausnehmung derart ausgestaltet, dass die Oberflächen der Rückseite des Rückspiegels und die Oberseite der Bremsleuchte bündig abschliessen. Die Bremsleuchte kann auch auf der Rückseite des Rückspiegels aufgeklebt oder in einer Halterung an dieser angeordnet sein. Diese Art der Anordnung ist besonders vorteilhaft, wenn das optische Signalisierungssystem nach Fertigstellung des Fahrzeugs, somit nachträglich eingebaut wird.

Der Rückspiegel kann im Fahrzeug oder an den Seiten des Fahrzeugs angeordnet werden. Ist der Rückspiegel innerhalb des Fahrzeugs angeordnet, leuchtet die Bremsleuchte nach vorne, vorzugsweise durch die Windschutzscheibe und ist somit vor Verschmutzungen weitgehend geschützt.

Das erfindungsgemässe optische Signalisierungssystem wird als ein in Fahrtrichtung nach vorn gerichtetes Signalisierungssystem verwendet. Vorzugsweise findet das Signalisierungssystem bei der optischen Signalisierung des Bremsvorgangs eines Fahrzeugs seine Anwendung.

Damit andere Verkehrsteilnehmer, insbesondere im Überlandverkehr oder auf Verkehrswegen auf welchen der Verkehr mit höheren Geschwindigkeiten zirkuliert, beispielsweise nicht durch die in Fahrtrichtung nach vorn gerichtete Bremsleuchte irritiert werden, kann die Bremsleuchte abhängig von der Geschwindigkeit gesteuert werden. Die nach vorn gerichtete Bremsleuchte leuchtet nur bei einem Bremsvorgang des Fahrzeugs auf, wenn sich das Fahrzeug z. B. mit einer Geschwindigkeit unter 50 km/h bewegt.

Die Steuerung der Bremsleuchte des erfindungsgemässen optischen Signalisierungssystems kann auf den Zustand der Bewegung des Fahrzeugs abgestimmt werden. Beispielsweise blinkt die Bremsleuchte in einem vorgegebenen Intervall, solange das Fahrzeug während dem Bremsvorgang noch in Bewegung ist. Befindet sich das Fahrzeug im Stillstand, leuchtet die Bremsleuchte solange wie die Bremsvorrichtung betätigt ist. Der Intervall der blinkenden Bremsleuchte kann zusätzlich von der Geschwindigkeit abhängig veränderlich sein. Der Intervall der blinkenden Bremsleuchte ist z. B. bei hohen Geschwindigkeiten, d. h. beispielsweise zu Beginn des Bremsvorgangs länger als bei niedrigen Geschwindigkeiten, beispielsweise kurz vor dem Stillstand des Fahrzeugs. Dieser Intervall kann auch umgekehrt gesteuert werden. Beispielsweise ein kurzes Blinken der Bremsleuchte bei niedrigen Geschwindigkeiten und ein langes Blinken der Bremsleuchte kurz vor dem Stillstand des Fahrzeugs.

Ein Leuchtenbausatz kann als erfindungsgemässes optisches Signalisierungssystem verwendet werden. Jede Art eines Leuchtenbausatzes ist für eine optische Signalisierung des Bremsvorgangs nach vorne geeignet, welcher eine Leuchte, einen Sensor zur Erkennung eines Bremsvorgangs, eine Steuerung und die entsprechende Verkabelung umfasst. Die Steuerung kann mit dem Sensor kombiniert werden beziehungsweise eine zusammenhängende Vorrichtung sein.

Als Sensor wird eine Vorrichtung verstanden, die eine Betätigung eines Mittels erkennen kann, welches die Bremsvorrichtung betätigt. In einem PKW erkennt der Sensor die Bewegung des Bremspedals zum Fahrzeugboden. Bei einem Motorrad erkennt der Sensor beispielsweise die Bewegung des Bremshandgriffs zum Lenker beziehungsweise die Bewegung des Fusspedals zum Boden. Stellt der Sensor eine solche Bewegung fest, steuert er die Bremsleuchte derart, dass sie zu leuchten beginnt.

Wenn der Sensor der Bremsvorrichtung, welcher die in Fahrrichtung nach hinten abstrahlenden Bremslichter steuert, in das erfindungsgemässe optische Signalisierungssystem eingebunden wird, kann auf einen eigenen Sensor für das erfindungsgemässe optische Signalisierungssystem verzichtet werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Frontansicht eines PKW mit verschiedenen Beispielen für die Anordnung der erfindungsgemässen optischen Signalisierungsvorrichtung; und
- Fig. 2: eine perspektivische Ansicht von vorne eines Motorrollers mit Beispielen für die Anordnung der erfindungsgemässen optischen Signalisierungsvorrichtung.
Grundsätzlich sind in den Figuren gleiche Teile mit gleichen Bezugszeichen versehen.

### Wege zur Ausführung der Erfindung

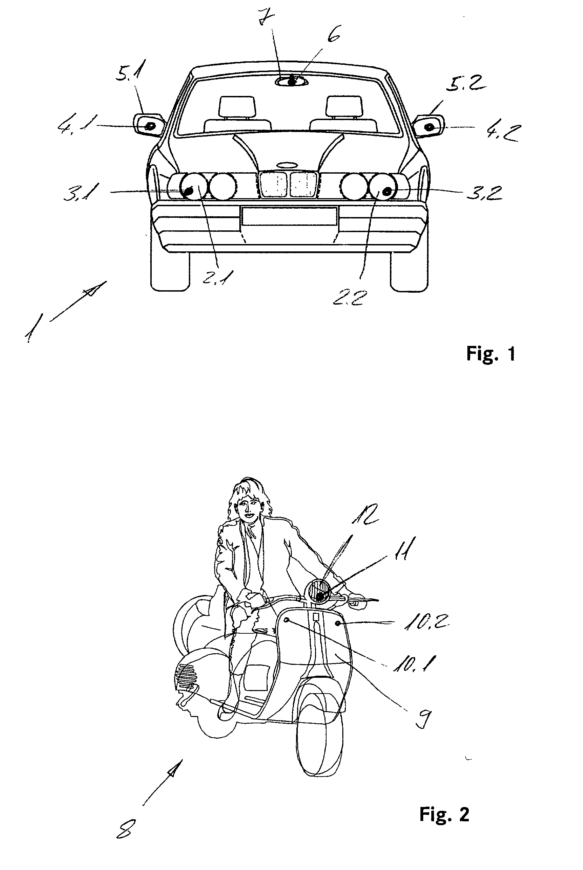

Figur 1 zeigt eine Frontansicht eines PKW mit verschiedenen Beispielen für die Anordnung der erfindungsgemässen optischen Signalisierungsvorrichtung. Die Frontbremsleuchten 3.1 und 3.2 sind am PKW 1 in den Scheinwerfern 2.1 und 2.2 angeordnet. Die Scheinwerfer 2.1 und 2.2 werden vorzugsweise derart ausgebildet, dass in einem Gehäuse mehrere Funktionen kombiniert sind (z.B. Fernlicht, Abblendlicht, Standlicht, Blinker und die erfindungsgemässe Frontbremsleuchte). Infolge der Abdeckung des Scheinwerfers 2.1 bzw. 2.2 sind auch die Frontbremsleuchten 3.1 und 3.2 vor einer Verschmutzung geschützt, beispielsweise durch Spritzwasser. Die meisten im Verkehr befindlichen PKW 1 verfügen über eine Scheinwerfer-Reinigungsanlage, welche die Abdeckungen der Scheinwerfer 2.1 und 2.2 reinigt. Neben der Verbesserung der Sichtverhältnisse für den Lenker des PKW 1, infolge der gereinigten Abdeckungen der Scheinwerfer 2.1 und 2.2, wird auch eine freie Sicht der anderen Verkehrsteilnehmern auf die Frontbremsleuchten 3.1 und 3.2 ermöglicht.

Nicht nur aus ästhetischen Gründen ist eine auf die Mitte des Kühlergrills bezogene spiegelsymmetrische Anordnung der Frontbremsleuchten 3.1 und 3.2 bevorzugt. Auch aufgrund der Sicherheit weist diese Anordnung Vorteile auf, da andere Verkehrsteilnehmer, beispielsweise Fussgänger, leuchtende Frontbremsleuchten 3.1 und 3.2 vom linken sowie auch vom rechten Strassenrand zur gleichen Zeit klar erkennen können. Weiter ist die Anordnung der Frontbremsleuchte 3.1 bzw. 3.2 im Scheinwerfer 2.1 bzw. 2.2 vorteilhaft, weil die Verkabelung der Frontbremsleuchte 3.1 bzw. 3.2 mit der Verkabelung des Scheinwerfers 2.1 bzw. 2.2 zusammengefasst werden kann. Dabei können beispielsweise die Kabel der Frontbremsleuchte 3.1 bzw. 3.2 mit dem Kabelstrang der Scheinwerfer 2.1 bzw. 2.2 zusammengebunden werden. Gegebenenfalls ist die Stromversorgung des Scheinwerfers 2.1 bzw. 2.2 und der Frontbremsleuchte 3.1 bzw. 3.2 kombiniert.

Die in den Seitenrückspiegel 5.1 und 5.2 des PKW 1 angeordneten Frontbremsleuchten 4.1 und 4.2 sind ein weiteres Beispiel für eine mögliche Anordnung. Die Seitenrückspiegel 5.1 und 5.2 weisen zu diesem Zweck in der in Fahrtrichtung nach vorn gerichteten Rückseite Ausnehmungen auf, in welchen die Frontbremsleuchten 4.1 und 4.2 eingesetzt werden. Die Ausnehmung im Seitenrückspiegel 5.1 bzw. 5.2 ist vorzugsweise komplementär zu den Aussenabmessungen der Frontbremsleuchte 4.1 bzw. 4.2. Die Abdeckung der Frontbremsleuchte 4.1 bzw. 4.2 ist dabei in der bevorzugten Ausführung dieser Konstruktion bündig mit der Aussenfläche der Rückseite des Seitenrückspiegels 5.1 bzw. 5.2. Dadurch wird die Aerodynamik des Seitenrückspiegels 5.1 bzw. 5.2 nicht verändert und es entstehen am Seitenrückspiegel 5.1 bzw. 5.2 keine zusätzlichen Verwirbelungen, welche zu einer stärkeren Verschmutzung der Karosserie und einem höheren Treibstoffverbrauch des PKW 1 führen würden, gegenüber einer Befestigung der Frontbremsleuchten 4.1 und 4.2 auf der Rückseite der Seitenrückspiegel 5.1 und 5.2.

Durch die annähernd genaue Anpassung der Ausnehmung im Seitenspiegel 5.1 bzw. 5.2 auf die Aussenabmessungen der eingesetzten Frontbremsleuchte 4.1 bzw. 4.2 wird der konstruktive Aufwand für die Abdichtung des vorhandenen Zwischenraums auf ein Minimum reduziert. Die Ausnehmung kann auch derart ausgestaltet werden, dass der Übergangsbereich zwischen dem Seitenrückspiegel 5.1 bzw. 5.2 und der Frontbremsleuchte 4.1 bzw. 4.2 treppenförmig ausgebildet ist. Dadurch kann eine Abdichtung im Innern des Seitenrückspiegels 5.1 bzw. 5.2 angeordnet werden, welche nur bedingt den Witterungseinflüssen ausgesetzt ist und somit eine lange Nutzung der Vorrichtung gewährleistet, ohne dass Schäden an der Abdichtung entstehen. In einer Variante können die Frontbremsleuchten 4.1 und 4.2 auch auf der Rückseite der Seitenrückspiegel 5.1 und 5.2 angeordnet werden. Beispielsweise werden sie an der Rückseite aufgeklebt oder es wird an der Rückseite des Seitenspiegels 5.1 bzw. 5.2 eine Halterung vorgesehen, an welcher die Frontbremsleuchte 4.1 bzw. 4.2 befestigt, beispielsweise eingeschnappt werden kann.

Die Verkabelung der Frontbremsleuchten 4.1 und 4.2 kann durch die Seitenrückspiegel 5.1 und 5.2 in die Türe des PKW 1 und von dort an die entsprechenden Anschlüsse weitergeführt werden. Sind die Seitenrückspiegel 5.1 und 5.2 elektrisch verstellbar und/oder beheizbar, kann die Verkabelung der Frontbremsleuchte 4.1 bzw. 4.2 mit der Verkabelung der Seitenrückspiegel 5.1 bzw. 5.2 zusammengefasst werden. Auch bei dieser Anordnung werden vorzugsweise in beiden Seitenrückspiegeln 5.1 und 5.2 je eine Frontbremsleuchte 4.1 bzw. 4.2 spiegelsymmetrisch bezogen auf die Mitte des Kühlergrills angeordnet. Dadurch ist die Signalisierung eines Bremsvorgangs des PKW 1 für die anderen Verkehrsteilnehmer von vorne und dabei gleichzeitig von links und rechts erkennbar.

Alternativ zu den bisher ausgeführten Möglichkeiten kann die Frontbremsleuchte 6 auch an der in Fahrtrichtung nach vorn ausgerichtete Rückseite des Rückspiegels 7 im Fahrgastraum des PKW 1 befestigt werden. Der Rückspiegel 7 weist zu diesem Zweck in der bevorzugten Ausführungsform eine Ausnehmung auf, in welcher die Frontbremsleuchte 6 eingesetzt wird. Gegenüber der Anordnung der Frontbremsleuchten 4.1 und 4.2 in den Seitenrückspiegeln 5.1 und 5.2 kann bei dem Rückspiegel 7 auf eine Abdichtung zwischen dem Rand der Ausnehmung im Rückspiegel 7 und der Frontbremsleuchte 6 verzichtet werden, da der Rückspiegel 7 im Fahrgastraum des PKW 1 angeordnet und somit vor Witterungseinflüssen geschützt ist. Es können für die Frontbremsleuchte 6 kostengünstigere Materialien verwendet werden, da keine Wetterbeständigkeit der Materialien nötig ist.

Die Anordnung der Frontbremsleuchte 6 am Rückspiegel 7 ist insbesondere geeignet, wenn das erfindungsgemässe optische Signalisierungssystem nachträglich im PKW 1 eingebaut wird. Die Frontbremsleuchte 6 kann an der in Fahrtrichtung nach vorn ausgerichteten Rückseite des Rückspiegels 7 aufgeklebt oder mittels einer Halterung befestigt werden. Die an der Rückseite des Rückspiegels 7 angeordnete Frontbremsleuchte 6 wirkt im Fahrgastraum nicht ästhetisch störend, weil die Frontbremsleuchte 6 sich auf der vom Lenker und den Passagieren abgewandten Seite des Rückspiegels 7 befindet.

Für den nachträglichen Einbau der Frontbremsleuchte 6 im PKW 1 wird vorzugsweise ein Bausatz verwendet. Der Bausatz für das erfindungsgemässe optische Signalisierungssystem umfasst z. B. eine Leuchte, welche ein Gehäuse mit eingebautem Reflektor und einen Leuchtkörper beinhaltet, einen Sensor, welcher mit dem Bremspedal verbunden ist und auf eine Bremsbetätigung an die Leuchte signalisiert, und Kabel, welche die Verbindung zwischen dem Sensor und der Leuchte sowie die Leuchte und den Sensor mit der Stromversorgung verbinden. Es kann auch der Sensor für die nach hinten abstrahlenden Bremslichter des PKW 1 verwendet werden. Auf einen separaten Sensor für die Frontbremsleuchte kann verzichtet werden, sofern die Frontbremsleuchte nicht anders als die Bremslichter gesteuert werden soll.

An einem PKW 1 können auch direkt an der Karosserie Frontbremsleuchten angeordnet werden. Beispielsweise werden die Frontbremsleuchten neben den Scheinwerfern 2.1 und 2.2 spiegelsymmetrisch bezogen auf die Mitte des Kühlergrills des PKW 1 angebracht. Weiter können die Frontbremsleuchten auch seitlich, im vorderen Bereich der in Fahrtrichtung des PKW 1 vorderen Kotflügeln angeordnet sein. Sind an den vorderen Kotflügeln bereits seitlich abstrahlende Blinker vorhanden, können die Frontbremsleuchten mit diesen kombiniert oder in der Nähe von diesen angeordnet werden. Somit kann die Verkabelung der Frontbremsleuchte und die des Blinkers zusammengefasst werden.

Obwohl die verschiedenen Anordnungsmöglichkeiten der Frontbremsleuchten einzeln dargestellt wurden, können auch mehrere Anordnungen kombiniert werden. D. h., es werden mehr als zwei Frontbremsleuchten am PKW 1 angeordnet. Beispielsweise werden in den Scheinwerfern 2.1 und 2.2 sowie am Rückspiegel 7 Frontbremsleuchten angeordnet. Die Leuchtstärke der angeordneten Frontbremsleuchten wird vorzugsweise auf die vorhandenen Normen für Bremslichter angepasst.

Zu beachten bleibt, dass nicht zu viele optische Signalisierungssysteme am Fahrzeug angebracht werden sollten, da ansonsten eine optische Reizüberflutung gegeben sein kann. Die anderen Verkehrsteilnehmer erkennen infolge vieler leuchtenden Signale die einzelnen Bedeutungen der Signale nicht mehr.

Eine perspektivische Ansicht von vorne eines Motorrollers mit verschiedenen Beispielen für die Anordnung der erfindungsgemässen optischen Signalisierungsvorrichtung ist in Figur 2 dargestellt. Der Motorroller 8 umfasst einen Windschutz 9, an welchem zwei Frontbremsleuchten 10.1 und 10.2 befestigt sind. Die Frontbremsleuchten 10.1 und 10.2 können auf dem Windschutz 9 aufgeklebt oder mit einer Halterung befestigt werden, beispielsweise mit einer Schraube. Die Verkabelung der Frontbremsleuchten 10.1 und 10.2 kann auf der dem Fahrer zugewandten Seite des Windschutzes 9, z. B. in einem Kabelkanal, dem Sensor und der Stromversorgung zugeführt werden. Betätigt der Lenker des Motorrollers 8 einen Bremshebel (ein Pedal und/oder einen Handgriff), beginnt die Bremsleuchte zu leuchten.

Da nicht alle Motorräder über einen Windschutz - wie den in Figur 2 dargestellten Windschutz 9 des Motorrollers 8 - verfügen, können die Frontbremsleuchten 10.1 und 10.2 auch an einer Windschutzscheibe oder an einer Halterungsvorrichtung angeordnet werden, beispielsweise für die Blinker.

Wie anhand der Figur 1 ausgeführt wurde, kann auch eine Frontbremsleuchte 11 im Scheinwerfer 12 angeordnet sein. Soweit es von Nutzen ist, können auch mehr als zwei Frontbremsleuchten am Motorroller 8 angebracht werden. Auch hier ist darauf zu achten, dass durch zu viel angeordnete Leuchten eine optische Reizüberflutung gegeben sein kann.

Vorzugsweise wird das erfindungsgemässe optische Signalisierungssystem mit der Signalisierung des Bremssystems kombiniert und koordiniert. Um entgegenkommende Verkehrsteilnehmer, insbesondere im Überlandverkehr, nicht durch optische Reize zu stören, kann die Frontbremsleuchte von der Geschwindigkeit abhängig gesteuert werden. Beispielsweise leuchtet die Frontbremsleuchte erst bei Geschwindigkeiten unter 50 km/h auf, wenn die Bremsvorrichtung betätigt wird. Somit werden keine unnötigen optischen Signale ausgesendet, welche die entgegenkommenden und/oder vorausfahrenden Verkehrsteilnehmer nur irritieren würden und auf die Verkehrssicherheit einen geringen Einfluss hätten. Ein leichtes Betätigen der Bremsvorrichtung bei hohen Geschwindigkeiten wird den anderen Verkehrsteilnehmern in Fahrtrichtung nach vorne nicht signalisiert. Somit werden die anderen Verkehrsteilnehmer nicht unnötig in ihrer Konzentration gestört, was der Verkehrssicherheit dienlich ist.

Ein Vorteil des erfindungsgemässen optischen Signalisierungssystems ist für vorausfahrende Verkehrsteilnehmer gegeben. Befindet sich z. B. ein Automobilist mit seinem Fahrzeug auf einer Autobahn und erreicht einen Stau, erkennt der vor ihm bereits stehende beziehungsweise sich bereits im Bremsvorgang befindliche Verkehrsteilnehmer, dass der hinter ihm nachfolgende Verkehrsteilnehmer den Bremsvorgang eingeleitet hat und somit die Gefahr eines Auffahrunfalls gering ist. Dies reduziert mögliche Stresssituationen im Verkehr, was ein weiterer Vorteil der Erfindung ist.

In den meisten Ländern sind Bremslichter, d.h. die Leuchten, welche eine Bremstätigkeit optisch in Fahrtrichtung eines Fahrzeugs nach hinten signalisieren, rot leuchtend. Dabei kann die Abdeckung rot eingefärbt sein oder es wird ein roter Leuchtkörper verwendet. Die Frontbremsleuchte wird in Anlehnung an diese Norm auch rot leuchtend ausgebildet. Sollte die Frontbremsleuchte in einem Land eingesetzt werden, in welchem eine andere Farbe für Bremslichter vorgeschrieben ist, kann die Abdeckung entsprechend dieser Norm eingefärbt und gegenüber der Standardausführung ausgetauscht werden. Es kann aber auch nur ein entsprechend dieser länderspezifischen Norm gefärbter Leuchtkörper ausgetauscht werden.

Zusammenfassend ist festzustellen, dass durch die Erfindung die Verkehrssicherheit massgeblich für Fussgänger und insbesondere für kleine Kinder und ältere Leute verbessert wird, da sie zu den schwächsten Verkehrsteilnehmern gehören. An Strassenübergängen ohne Lichtsignale ist es für diese Verkehrsteilnehmer oft schwierig, die Situation richtig einzuschätzen. Durch das erfindungsgemässe optische Signalisierungssystem kann die Anzahl der Verkehrsunfälle massgeblich, insbesondere im Stadtverkehr gesenkt werden. Zusätzlich werden Stresssituationen im Verkehr reduziert. Des Weiteren ist das erfindungsgemässe optische Signalisierungssystem einfach im Aufbau, flexibel bezüglich der Anordnung, kann an verschiedensten Fahrzeugen angeordnet werden und ist kostengünstig herstellbar.

## Patentansprüche

1. Fahrzeug mit einer Bremsvorrichtung, **gekennzeichnet durch** ein in Fahrtrichtung nach vorn gerichtetes optisches Signalisierungssystem zur Signalisierung einer Bremsbetätigung der Bremsvorrichtung.

2. Fahrzeug nach Anspruch 1, **dadurch gekennzeichnet, dass** das optische Signalisierungssystem eine in Fahrtrichtung nach vorn abstrahlende Bremsleuchte (3.1/3.2, 4.1/4.2, 6, 10.1/10.2, 11) umfasst.

3. Fahrzeug nach Anspruch 2, **dadurch gekennzeichnet, dass** die Bremsleuchte (4.1/4.2, 6) an einer in Fahrtrichtung nach vorn gerichteten Rückseite eines Rückspiegels (5.1/5.2, 7) angeordnet ist.

4. Fahrzeug nach Anspruch 2, **dadurch gekennzeichnet, dass** die Bremsleuchte (3.1/3.2, 11) in oder neben einem Scheinwerfer (2.1/2.2, 12) angeordnet ist.

5. Fahrzeug nach Anspruch 2, **dadurch gekennzeichnet, dass** die Bremsleuchte (6) in einem Fahrgastraum des Fahrzeugs derart angeordnet ist, dass sie durch eine Windschutzscheibe in Fahrtrichtung nach vorn leuchten kann.

6. Fahrzeug nach einem der Ansprüche 1 bis 5, **dadurch gekennzeichnet, dass** es ein Personentransportfahrzeug, insbesondere ein Personenkraftwagen (PKW) (1) ist.

7. Fahrzeug nach einem der Ansprüche 1 bis 5, **dadurch gekennzeichnet, dass** es ein Zweiradfahrzeug (8) ist.

8. Fahrzeug nach einem der Ansprüche 1 bis 7, **dadurch gekennzeichnet, dass** das Signalisierungssystem ein nachträglich montierbarer Bausatz ist.

9. Fahrzeug nach einem der Ansprüche 1 bis 8, **dadurch gekennzeichnet, dass** es auch eine in Fahrtrichtung nach hinten abstrahlende Bremsleuchte hat.

10. Rückspiegel (5.1/5.2, 7) mit einem Signalisierungssystem zur Verwendung in einem in Fahrtrichtung nach vorn gerichteten optischen Signalisierungssystem.

11. Verwendung eines optischen Signalisierungssystems als ein in Fahrtrichtung nach vorn gerichtetes optisches Signalisierungssystem.

12. Verwendung eines Leuchtenbausatzes als ein in Fahrtrichtung nach vorn gerichtetes optisches Signalisierungssystem zur Signalisierung einer Bremsbetätigung der Bremsvorrichtung eines Fahrzeugs (1, 8).
